# EUROPEAN PATENT APPLICATION

(11) **EP 4 696 459 A1**
(43) Date of publication of application: **18.02.2026**
(21) Application number: 25195658.7
(22) Date of filing: 13.08.2025
(51) Int. Cl.: B25B 23/10

(54) **RETAINING AND GUIDING ARRANGEMENT FOR FASTENER**

(30) Priority: 15.08.2024 US 202418805832
(71) Applicant: ABB SCHWEIZ AG, 5400 Baden (CH)
(72) Inventor: SAWANT, Sanman, 400081 Mumbai (IN); AMILL, Yashar, Plantsville, 06479 (US); JAIN, Mukesh, 500079 Hyderabad (IN); TUMU, Nagesh, Unionville, 06085 (US); SH, Devadatha, 500055 Hyderabad (IN)
(74) Representative: Zimmermann & Partner Patentanwälte mbB

(57) **Abstract**

A retainer arrangement for retaining and guiding a fastener to an object includes a body having an opening, a cylindrical cavity, and a pair of projections defining attachment elements for attaching to a mounting surface, the cylindrical cavity having an internal dome step at a first end of the cylindrical cavity and a tapered entry at a second end of the cylindrical cavity, wherein the fastener is received in the cylindrical cavity, and the opening being defined between the pair of projections.

## Description

### FIELD

The present disclosure relates to a retainer arrangement that attaches to a mounting surface and retains and guides a fastener to an object.

### BACKGROUND

Manufacturers use various methods for securing objects or members together in sometimes awkward assembly situations or situations in which fasteners may be lost or misaligned. Manufacturers may strive to increase productivity by reducing assembly time during a manufacturing process by pre-attaching fasteners to members that may be later used in the assembly of a particular object or component. For example, one conventional method involves welding certain components together, such as welding a nut to one side of a work piece so that it is unnecessary to interact with the nut using a tool during assembly. However, such a welding procedure may introduce problems as the welding of the nut does not allow for any tolerances and the nut is immovable with respect to the work piece. Other conventional methods may use a thin metal strip as a retainer that engages with a fastener in an attempt to guide the fastener. However, this type of arrangement can sometimes damage the fastener or the threads of the fastener. Depending on the type of engagement mechanism used to engage with the fastener it may be impossible to remove the retainer without breaking or damaging both the retainer and fastener. Thin metal strip retainers are also prone to breaking during shipping or assembly. Thin metal strip retainers may also deform and lose functionality which require using additional means to attach the metal strip to a mounting surface such as riveting or welding. Metal strip retainers which lose a fastener or damage a fastener result in increased costs to replace the fastener as well as an additional burden to logistics as replacement fasteners will need to be shipped to users.

### SUMMARY

An embodiment of the present disclosure provides a retainer arrangement for retaining and guiding a fastener to an object. The retainer arrangement includes: a body having an opening, a cylindrical cavity, and a pair of projections defining attachment elements for attaching to a mounting surface, said cylindrical cavity having an internal dome step at a first end of the cylindrical cavity and a tapered entry at a second end of the cylindrical cavity, wherein the fastener is received in the cylindrical cavity, and said opening being defined between the pair of projections.

In an embodiment of the retainer arrangement, the opening is a U-shaped opening.

In an embodiment of the retainer arrangement, the attachment elements include notches for attaching to the mounting surface, wherein the mounting surface has corresponding notches for receiving the notches of the attachment elements.

In an embodiment of the retainer arrangement, the corresponding notches upon being engaged by the notches of the attachment elements are adapted to limit movement of the retainer arrangement in a first direction and a second direction.

In an embodiment of the retainer arrangement, the body is composed of a thermoplastic composition.

In an embodiment of the retainer arrangement, the body is composed of a spring steel composition or elastic material.

In an embodiment of the retainer arrangement, the opening is adapted to flex the pair of projections upon receiving a force along an axis that is transverse to an axis of the cylindrical cavity.

In an embodiment of the retainer arrangement, the tapered entry at the second end of the cylindrical cavity is adapted to allow entry of the fastener.

In an embodiment of the retainer arrangement, the internal dome step is adapted to stop vertical movement of the fastener in a vertical direction relative to the tapered entry.

In an embodiment of the retainer arrangement, the cylindrical cavity is smooth and aligns the fastener with an axis of the object.

In an embodiment of the retainer arrangement, dimensions of the pair of projections are adapted to attach to the mounting surface based on a type of the mounting surface or a position of the object.

In an embodiment of the retainer arrangement, the pair of projections are adapted to snap fit to the mounting surface.

In an embodiment of the retainer arrangement, the internal dome step at the first end of the cylindrical cavity is adapted to guide a torquing tool for interacting with the fastener received in the cylindrical cavity.

Another embodiment of the present disclosure provides a system for retaining and guiding a fastener to an object. The system includes: a body having an opening, a cylindrical cavity, and a pair of projections defining attachment elements for attaching to a mounting surface, said cylindrical cavity having an internal dome step at a first end of the cylindrical cavity and a tapered entry at a second end of the cylindrical cavity, wherein the fastener is received in the cylindrical cavity, and said opening being defined between the pair of projections.

In an embodiment of the system, the attachment elements include notches for attaching to the mounting surface, wherein the mounting surface has corresponding notches for receiving the notches of the attachment elements.

In an embodiment of the system, the body is composed of a thermoplastic composition.

In an embodiment of the system, the opening is adapted to flex the pair of projections upon receiving a force along an axis that is transverse to an axis of the cylindrical cavity.

In an embodiment of the system, the tapered entry at the second end of the cylindrical cavity is adapted to allow entry of the fastener.

In an embodiment of the system, the internal dome step is adapted to stop vertical movement of the fastener in a vertical direction relative to the tapered entry.

Another embodiment of the present disclosure is directed to a method for attaching a retainer arrangement to a mounting surface including the steps of: providing a fastener in a body of the retainer arrangement via a tapered entry of a cylindrical cavity of a body of the retainer arrangement, the body having an opening, the cylindrical cavity, and a pair of projections defining attachment elements for attaching the body to the mounting surface, the cylindrical cavity having an internal dome step at a first end of the cylindrical cavity and the tapered entry at a second end of the cylindrical cavity, the opening defined between the pair of legs, the fastener secured in the retainer arrangement by the cylindrical cavity, and guiding the fastener to an object via the retainer arrangement, wherein the fastener is directed to the object by a tool.

### BRIEF DESCRIPTION OF THE DRAWINGS

Embodiments of the present disclosure will be described in even greater detail below based on the exemplary figures. The present disclosure is not limited to the exemplary embodiments. All features described and/or illustrated herein can be used alone or combined in different combinations in embodiments of the present disclosure. The features and advantages of various embodiments of the present disclosure will become apparent by reading the following detailed description with reference to the attached drawings which illustrate the following:
FIG. 1 illustrates a perspective view of a retainer arrangement, according to one or more examples of the present disclosure;
FIG. 2 illustrates a perspective view of a retainer arrangement and a mounting surface with a fastener in place, according to one or more examples of the present disclosure;
FIG. 3 illustrates a detailed side view of a retainer arrangement and a mounting surface, according to one or more examples of the present disclosure;
FIG. 4 illustrates a perspective view of a retainer arrangement and a mounting surface, according to one or more examples of the present disclosure;
FIG. 5 illustrates a top plan view of a retainer arrangement and a mounting surface, according to one or more examples of the present disclosure;
FIG. 6 illustrates a top plan view and detailed side view of a retainer arrangement, a mounting surface, and a tool for interacting with a fastener, according to one or more examples of the present disclosure;
FIG. 7 illustrates a top plan view and detailed back view of a retainer arrangement and a mounting surface, according to one or more examples of the present disclosure; and
FIG. 8 illustrates a process for attaching a retainer arrangement to a mounting surface and guiding a fastener to an object via the retainer arrangement, according to one or more examples of the present disclosure.

### DETAILED DESCRIPTION

The present disclosure describes a retainer arrangement that solves the above and other problems associated with conventional fastener retainers or retainer arrangements. In an embodiment, the retainer arrangement of the present disclosure restricts a head region of a fastener while providing flexibility for the fastener to move up and down in a vertical direction while guiding the fastener and the torquing tool to attach the fastener to an object. In embodiments, the retainer arrangement may be composed of a thermoplastic composition thereby providing flexible attachment without altering a final geometry of the retainer arrangement. A cylindrical cavity of a body of the retainer arrangement acts as the guide by restricting/holding/limiting the fastener in the head region and does not damage the fastener or parts of the fastener (e.g. threads). In embodiments, the cylindrical cavity includes a tapered entry allowing for easier access to receive the fastener as well as an internal dome step which restricts vertical movement of the fastener so that the fastener does not fall out of the retainer arrangement. The retainer arrangement of the present disclosure also includes attachment elements which may include notches for attaching to a mounting surface in a snap-fit manner. In embodiments, the attachment elements may include other features which interact with notches of a mounting surface or other attachment elements of the mounting surface. The notches may interact with corresponding notches of the mounting surface to restrict horizontal and vertical movement of the retainer arrangement while still providing easy attachment and removal of the retainer arrangement to the mounting surface.

In particular, exemplary aspects of the retaining arrangement according to the present disclosure, are further elucidated below in connection with exemplary embodiments, as depicted in the figures. The exemplary embodiments illustrate some implementations of the present disclosure and are not intended to limit the scope of the present disclosure.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on."

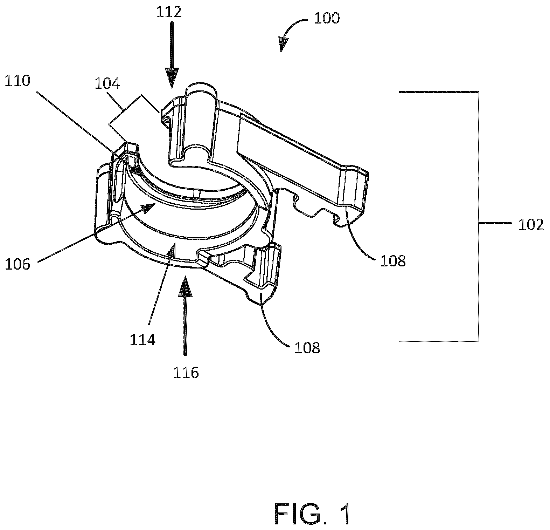

FIG. 1 illustrates a perspective view of a retainer arrangement 100, according to one or more examples of the present disclosure. The retainer arrangement 100 includes a body 102 having an opening 104, a cylindrical cavity 106, and a pair of projections 108 that define attachment elements for attaching the retainer arrangement 100 to a mounting surface (not pictured). In embodiments, the cylindrical cavity 106 may have an internal dome step 110 at a first end 112 and a tapered entry 114 at a second end 116. The first end 112 of the cylindrical cavity 106 may be located at a top part of the retainer arrangement 100 while the second end 116 of the cylindrical cavity 106 may be located at a bottom part of the retainer arrangement 100.

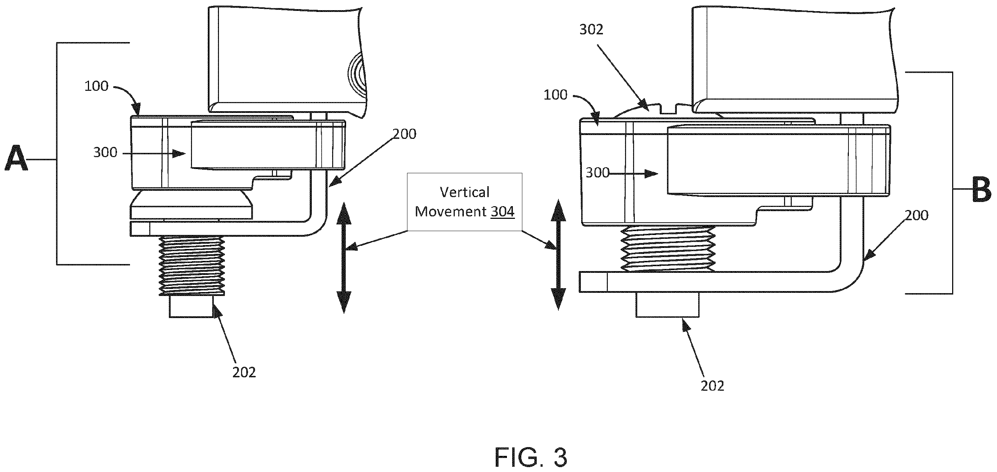

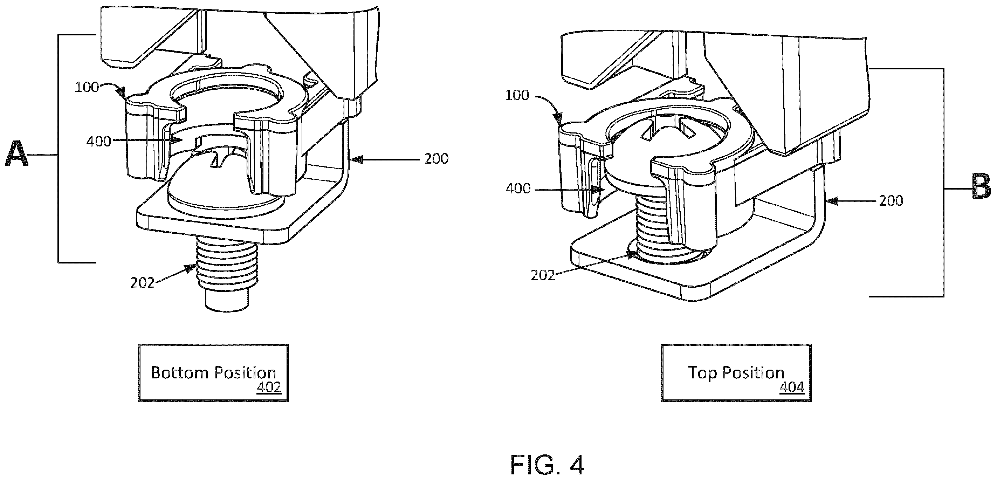

The opening 104 may be located or defined between the pair of projections 108. In embodiments, the opening may be a U-shaped opening. The opening 104 may aid in limiting the flexibility of the retainer arrangement 100. The tapered entry 114 may be adapted to allow entry of a fastener (not pictured) while the internal dome step 110 is adapted to limit or stop vertical movement of the fastener in a vertical direction relative to the tapered entry 114 (e.g. allow vertical movement of the fastener up to a position allowed by the internal dome step but no further - as illustrated and described below with reference to FIGs. 3 and 4). The retainer arrangement 100 and/or the body 102 of the retainer arrangement may be composed of a thermoplastic composition, a spring steel composition, an elastic material, or any suitable material that allows for a certain degree of elasticity and flexibility after being stretched or acted upon by an external force such as a non-plastic, non-ferrous material.

The cylindrical cavity 106 may be smooth absent any threads or protrusions for catching or otherwise damaging threads or components of a received fastener. In embodiments, the retainer arrangement 100, the internal dome step 110, and the cylindrical cavity 106 may be adapted to guide a torquing tool (not pictured) for interacting with a fastener received within the cylindrical cavity 106. The dimensions and proportions of the retainer arrangement 100 and components of the retainer arrangement 100 may vary depending on a type of the fastener that is to be received or retained and guided to an object and/or a mounting surface to which the retainer arrangement 100 may attach to. For example, the pair of projections 108 may be of a longer length than depicted in FIG. 1 to interact with a certain type of mounting surface. As will be described in more detail below, the retainer arrangement 100 may be snap fit or otherwise attached to a mounting surface via attachment elements of the pair of projections 108 (e.g., notches, teeth, slots, grooves, indentations, etc.). In embodiments, the cylindrical cavity 106, the internal dome step 110, and the tapered entry 114 create a defined degree of vertical path movement for a fastener that limits movement of the fastener for easier assembly, installation, or transportation/shipment with the advantage of not allowing so much freedom so as to lose the fastener as it is unable to fall out of the retainer arrangement 100.

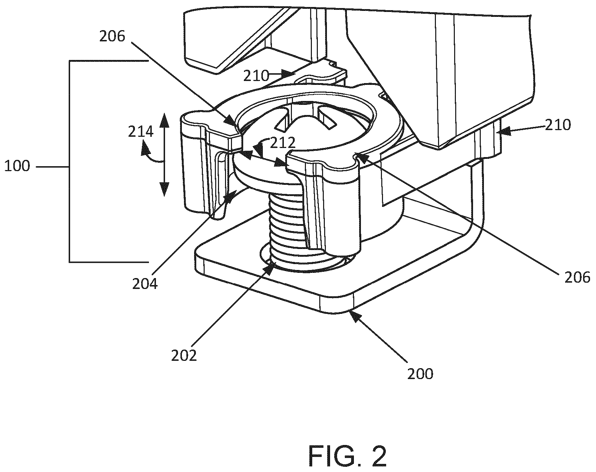

FIG. 2 illustrates a perspective view of a retainer arrangement 100 and a mounting surface 200 with a fastener 202 in place, according to one or more examples of the present disclosure. As depicted in FIG. 2, the retainer arrangement 100 is attached to the mounting surface 200 via the pair of projections. FIG. 2 also depicts a fastener 202 received in the cylindrical cavity 204 of the retainer arrangement 100. FIG. 2 also illustrates the U-shaped or semi-circle opening 206 of the body of the retainer arrangement 100. In embodiments, the opening 206 of the body is configured or otherwise adapted to flex the pair of projections 210 upon receiving a force along an axis 212 that is transverse to an axis 214 of the cylindrical cavity 206.

As the retainer arrangement 100 includes a thermoplastic or elastic material composition it is adapted to flex and provide flexible attachment without altering a final geometry of the retainer arrangement 100. The retainer arrangement 100 is configured to flex the pair of projections 210 in an outward direction to a second position and from a first position that is opposite to the direction of the force along the axis 212 to enable the retainer arrangement 100 to be placed into position for attaching to the mounting surface 200. Upon releasing the retainer arrangement 100 or ceasing to apply the force along the axis 212, the pair of projections 210 may snap back from the second position and back into a first position or original position thereby achieving a snap fit of the retainer arrangement 100 to the mounting surface 200. The snap fit of the pair of projections 210 to the mounting surface 200 may include a cantilever snap fit design or a torsional design. It should be noted that the axis 212 when viewed from the angle depicted in FIG. 2 is transverse to the axis 214 of the cylindrical cavity 206.

FIG. 3 illustrates a detailed side view of a retainer arrangement 100 and a mounting surface 200, according to one or more examples of the present disclosure. FIG. 3 also depicts fastener 202 received in the cylindrical cavity 300 of the retainer arrangement 100. Although the fastener 202 includes threads for interacting with an object such as a mounting surface 200 or object abutted to the mounting surface 200, embodiments disclosed herein are not limited to such a type of fastener 202. Fasteners including screws, bolts, nails, and rivets with or without threads or with special types of threads may be received by the retainer arrangement 100 and guided by the cylindrical cavity 300 into an object. The fasteners received by the retainer arrangement 100 and guided to an object may also include various drives and/or heads and are not limited to the head depicted in the figures of the present disclosure.

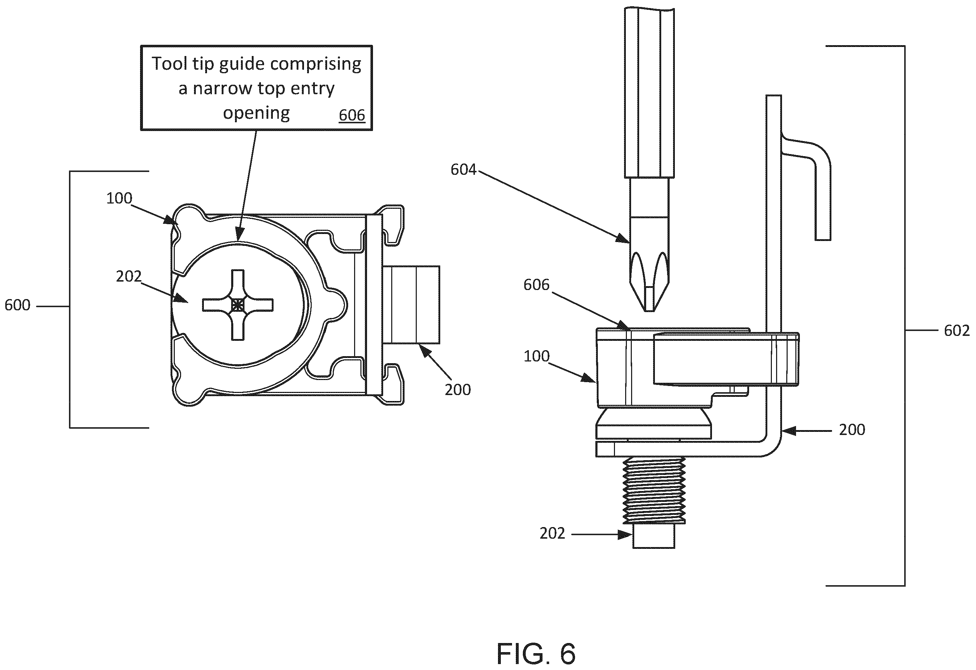

As will be described in more detail below with reference to FIG. 6 a torquing tool or tool may interact with the fastener 202. In FIG. 3 the torquing tool interacts with the fastener 202 via the drive and head 302 of the fastener 202. As depicted in FIG. 3, the fastener 202 is allowed vertical movement 304 up to a certain position (e.g. limited by the internal dome step of the cylindrical cavity 300 as depicted in B of FIG. 3) and down to another position (e.g., limited by the physical dimensions of the mounting surface 200 as depicted in A of FIG. 3). The vertical movement 304 of the fastener 202 is limited by the internal dome step of the cylindrical cavity 300 so that the fastener 202 does not fall out of the retainer arrangement 100 during assembly. In embodiments, the retainer arrangement 100 may attach to the mounting surface 200 to align the fastener 202 with a hole in an object and/or the mounting surface 200 as movement of the fastener 202 is limited by the cylindrical cavity 300 of the retainer arrangement 100.

FIG. 4 illustrates a perspective view of a retainer arrangement 100 and a mounting surface 200, according to one or more examples of the present disclosure. FIG. 4 depicts fastener 202 guided via retainer arrangement 100 and the cylindrical cavity 400 of the retainer arrangement 100 to a bottom position 402 (e.g. A of FIG. 4). The bottom position 402 may correspond to an end position or engaged position between the fastener 202 and an object that is being interacted with by the fastener 202. As described herein and depicted in FIG. 6, a tool or torquing tool may interact or torque the fastener 202 to the bottom position 402 and a head of the fastener 202 is guided by the cylindrical cavity 400 such that the tool and the fastener 202 are aligned to secure the fastener 202 into the object. The cylindrical cavity 400 and retainer arrangement 100 are adapted to receive the fastener 202, limit vertical movement and horizontal movement of the fastener 202, and guide the fastener 202 and a tool interacting with the fastener 202 during a torquing process.

The fastener 202 may be torqued or otherwise interacted with to move between the bottom position 402 to a top position 404 (e.g. B of FIG. 4). In embodiments, the retainer arrangement 100 may come preassembled or pre-positioned with the fastener 202 placed at the top position 404 or somewhere between the top position 404 and the bottom position 402. This provides flexibility during further assembly or interaction of the retainer arrangement 100 and an object or mounting surface 200. The tapered entry (referencing 114 of FIG. 1) of the cylindrical cavity 400 is adapted to allow smooth movement or reception of the fastener 202 within the retainer arrangement 100 and cylindrical cavity 400 without damaging the fastener 202 or threads of the fastener 202.

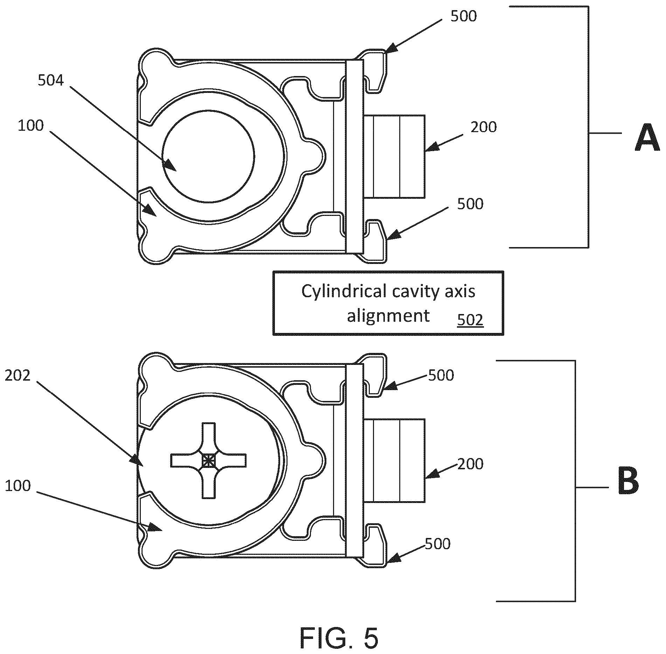

FIG. 5 illustrates a top plan view of a retainer arrangement 100 and a mounting surface 200, according to one or more examples of the present disclosure. As described herein, the retainer arrangement 100 and body of the retainer arrangement 100 may include a pair of projections 500 that define attachment elements for attaching to the mounting surface 200. The top portion (A) of FIG. 5 depicts the retainer arrangement 100 absent a received fastener 202. The top portion A of FIG. 5 depicts a cylindrical cavity axis alignment 502 for aligning the fastener 202 with a mounting hole, attachment hole, or assembly hole (assembly hole) 504 of an object that the fastener 202 may interact with during assembly. The retainer arrangement 100 may be attached to mounting surface 200 so as to align any received fastener 202 with the assembly hole 504 so that no misalignments can occur during torquing the fastener 202.

A tool or torquing tool is guided by the retainer arrangement 100 and the cylindrical cavity of the retainer arrangement 100 as the components of the retainer arrangement (e.g., cylindrical cavity, internal dome step, tapered entry) 100 limit horizontal movement and vertical movement of the fastener 202 while aligning the fastener 202 along the cylindrical cavity axis alignment 502 to interact with the assembly hole 504. The bottom portion (B) of FIG. 5 depicts the fastener 202 guided by the retainer arrangement 100 into the assembly hole 504 via the cylindrical cavity axis alignment 502 provided by the retainer arrangement 100 and the cylindrical cavity of the retainer arrangement 100. Although the figures of the present disclosure depict singular retainer arrangements 100 for retaining and guiding fasteners during an assembly process the present disclosure is not limited to single retainer arrangements 100. For example, retainer arrangements 100 may be provided in series, such as in two retainer arrangements connected in parallel to each other to enable the alignment and guiding of multiple fasteners to an object and/or mounting surface.

FIG. 6 illustrates a top plan view 600 and detailed side view 602 of a retainer arrangement 100, a mounting surface 200, and a tool 604 for interacting with a fastener 202, according to one or more examples of the present disclosure. The top plan view 600 of FIG. 6 depicts tool tip guide which comprises a narrow top entry opening 606 formed by the cylindrical cavity and internal dome step of the cylindrical cavity of the retainer arrangement 100. As described herein, the retainer arrangement 100 may receive a fastener 202 and align the fastener with a hole or assembly hole of an object or mounting surface via the cylindrical cavity of the retainer arrangement 100. The cylindrical cavity may also guide the tool 604 as it interacts or otherwise torques the fastener 202 via the retainer arrangement 100.

The detailed side view 602 of the retainer arrangement depicts the tool interacting with the retainer arrangement 100 via the narrow top entry opening for tool tip guiding 606 from a different perspective. As described herein, a tool, such as tool 604, may be guided to interact with the fastener 202 at a top position (404 of FIG. 4) by the retainer arrangement 100 and the narrow top entry opening for tool tip guiding 606 formed by the body, cylindrical cavity, and internal dome step of the retainer arrangement 100. The tool 604 may be guided to torque or otherwise interact with the fastener 202 until the fastener arrives at a bottom position (402 of FIG. 4) as depicted in the detailed side view 602 of FIG. 6. The tool 604 may also be guided to torque or otherwise interact with the fastener 202 at the bottom position to remove or disengage the fastener 202 from an object or mounting surface 200.

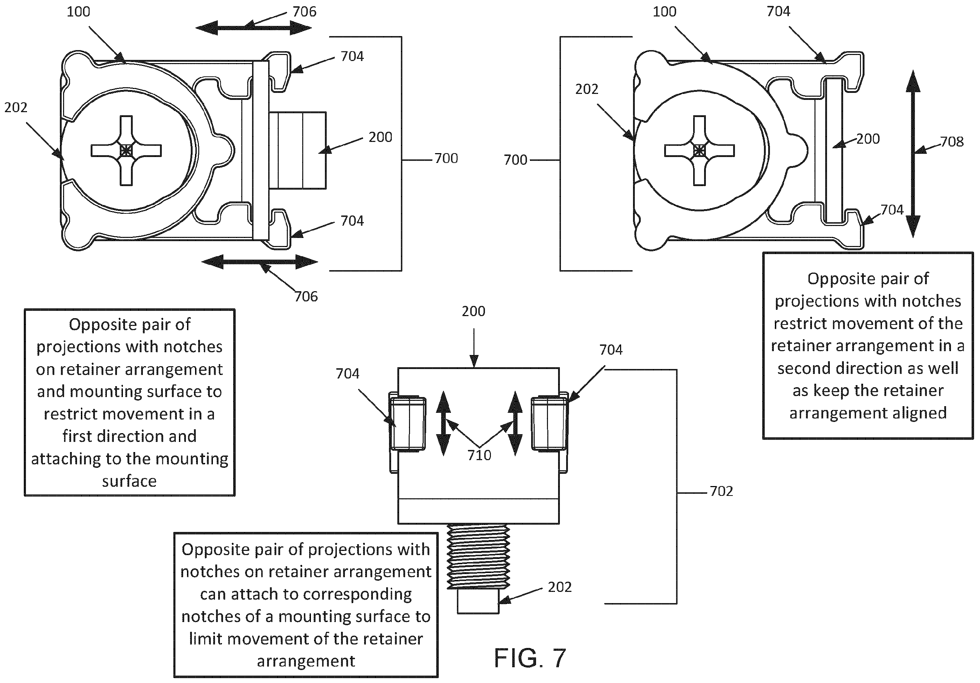

FIG. 7 illustrates a top plan view 700 and detailed back view 702 of a retainer arrangement 100 and a mounting surface 200, according to one or more examples of the present disclosure. The top plan view 700 of FIG. 7 depicts the retainer arrangement 100 that has received a fastener 202 and is attached to mounting surface 200. In embodiments, the retainer arrangement 100 may be attached to the mounting surface via attachment elements 704 of the pair of projections of the body of the retainer arrangement 100. As depicted in FIG. 7 the attachment elements may include notches which interact, snap fit, or otherwise attach to corresponding notches of the mounting surface 200. The retainer arrangement 100 attached to the mounting surface 200 via the attachment elements 704 may restrict movement of the retainer arrangement 100 in a first direction such as a horizontal direction 706 with respect to the mounting surface 200.

The retainer arrangement 100 attached to the mounting surface 200 via the attachment elements 704 may restrict movement of the retainer arrangement 100 in a second direction such as a vertical direction 708 with respect to the mounting surface 200. The detailed back view 702 of the retainer arrangement 100 and mounting surface 200 depicts the attachment elements 704 of the retainer arrangement 100 attached to corresponding notches of the mounting surface 200 to limit movement of the retainer arrangement in a third direction 710. The retainer arrangement 100 having limited movement once attached to the mounting surface 200 provides for proper alignment of the fastener 200 to an assembly hole for interacting with an object or the mounting surface 200.

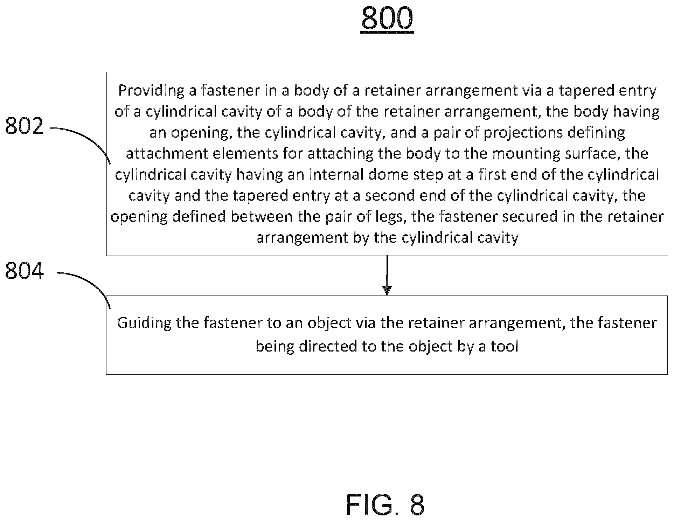

FIG. 8 illustrates a process for attaching a retainer arrangement to a mounting surface and guiding a fastener to an object via the retainer arrangement, according to one or more examples of the present disclosure. The process 800 may be performed by the retainer arrangement of FIGs. 1-7. However, it will be recognized that any of the following blocks may be performed in any suitable order and that the process 800 may be performed in any environment.

At block 802, a fastener is provided in a body of the retainer arrangement via a tapered entry of a cylindrical cavity of a body of the retainer arrangement, the body having an opening, the cylindrical cavity, and a pair of projections defining attachment elements for attaching the body to the mounting surface, the cylindrical cavity having an internal dome step at a first end of the cylindrical cavity and the tapered entry at a second end of the cylindrical cavity, the opening defined between the pair of legs, the fastener secured in the retainer arrangement by the cylindrical cavity. As described herein, the cylindrical cavity and tapered entry are adapted to allow entry of the fastener while the internal dome step of the cylindrical cavity limits vertical movement of the fastener. In embodiments, the fastener, as depicted in FIGs. 3 and 4, has the freedom to move up to a certain position (e.g. top position) so that the fastener does not fall out of the retainer arrangement, and down to a certain position (e.g., bottom position) to secure the fastener to an object or otherwise cause the fastener to interact with the object. A tool, such as a torquing tool, may also interact with the fastener to torque the fastener to interact with the object. As described above with reference to FIGs. 1 and 7, the pair of projections may snap fit onto the mounting surface thereby attaching the retainer arrangement to the mounting surface. A force may be applied to the retainer arrangement along a certain axis that causes the pair of projections to flex or open, and upon releasing the force or ceasing to apply the force the pair of projections may snap fit into the mounting surface.

At block 804, the fastener is guided to an object via the retainer arrangement, and the fastener is directed to the object by a tool. The cylindrical cavity and internal dome step may guide the tool to interact with the fastener as the tool applies force to the fastener for interacting with an object. In embodiments, the cylindrical cavity may limit horizontal and vertical movement of the tool such that it is easier for the tool to interact with the fastener as depicted in FIG. 6.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

Indeed, the application may be exemplified in different forms and should not be construed as limited to the examples set forth herein; rather, these examples are provided so that the application will satisfy applicable legal requirements. Furthermore, when it is said herein that something is "based on" something else, it may be based on one or more other things as well. In other words, unless expressly indicated otherwise, as used herein "based on" means "based at least in part on" or "based at least partially on".

## Claims

1. A retainer arrangement for retaining and guiding a fastener to an object comprising:
a body having an opening, a cylindrical cavity, and a pair of projections defining attachment elements for attaching to a mounting surface;
said cylindrical cavity having an internal dome step at a first end of the cylindrical cavity and a tapered entry at a second end of the cylindrical cavity, wherein the fastener is received in the cylindrical cavity; and
said opening being defined between the pair of projections.

2. The retainer arrangement according to claim 1, wherein the opening is a U-shaped opening.

3. The retainer arrangement according to claim 1 or 2, wherein the attachment elements include notches for attaching to the mounting surface, wherein the mounting surface has corresponding notches for receiving the notches of the attachment elements.

4. The retainer arrangement according to claim 3, wherein the corresponding notches upon being engaged by the notches of the attachment elements are adapted to limit movement of the retainer arrangement in a first direction and a second direction.

5. The retainer arrangement according to any of claims 1 - 4, wherein the body is composed of a thermoplastic composition.

6. The retainer arrangement according to any of claims 1 - 4, wherein the body is composed of a spring steel composition or elastic material.

7. The retainer arrangement according to any of the preceding claims, wherein the opening is adapted to flex the pair of projections upon receiving a force along an axis that is transverse to an axis of the cylindrical cavity.

8. The retainer arrangement according to any of the preceding claims, wherein the tapered entry at the second end of the cylindrical cavity is adapted to allow entry of the fastener.

9. The retainer arrangement according to any of the preceding claims, wherein the internal dome step is adapted to stop vertical movement of the fastener in a vertical direction relative to the tapered entry.

10. The retainer arrangement according to any of the preceding claims, wherein the cylindrical cavity is smooth and aligns the fastener with an axis of the object.

11. The retainer arrangement according to any of the preceding claims, wherein dimensions of the pair of projections are adapted to attach to the mounting surface based on a type of the mounting surface or a position of the object.

12. The retainer arrangement according to any of the preceding claims, wherein the pair of projections are adapted to snap fit to the mounting surface.

13. The retainer arrangement according to any of the preceding claims, wherein the internal dome step at the first end of the cylindrical cavity is adapted to guide a torquing tool for interacting with the fastener received in the cylindrical cavity.

14. A use of the retainer arrangement according to any of the preceding claims for retaining and guiding a fastener to an object.

15. A method for attaching a retainer arrangement to a mounting surface comprising the steps of:
providing a fastener in a body of the retainer arrangement via a tapered entry of a cylindrical cavity of a body of the retainer arrangement, the body having an opening, the cylindrical cavity, and a pair of projections defining attachment elements for attaching the body to the mounting surface, the cylindrical cavity having an internal dome step at a first end of the cylindrical cavity and the tapered entry at a second end of the cylindrical cavity, the opening defined between the pair of legs, the fastener secured in the retainer arrangement by the cylindrical cavity; and
guiding the fastener to an object via the retainer arrangement, wherein the fastener is directed to the object by a tool.
